Europäisches Patentamt

European Patent Office

Office européen des brevets

(19)

(11) Veröffentlichungsnummer : **0 036 170**
**B1**

(12)

# EUROPÄISCHE PATENTSCHRIFT

(45) Veröffentlichungstag der Patentschrift :
23.05.84

(21) Anmeldenummer : **81101752.4**

(22) Anmeldetag : **10.03.81**

(51) Int. Cl.³ : **C 08 F236/04, C 09 J 3/12**

(54) **Verfahren zur Herstellung von Synthesekautschuklatices, deren Verwendung als Haftklebstoffrohstoff bei der Herstellung von Haftklebemassen sowie Haftklebemassen.**

(30) Priorität : **19.03.80 DE 3010429**

(43) Veröffentlichungstag der Anmeldung :
**23.09.81 Patentblatt 81/38**

(45) Bekanntmachung des Hinweises auf die Patenterteilung : **23.05.84 Patentblatt 84/21**

(84) Benannte Vertragsstaaten :
**BE DE FR GB IT NL SE**

(56) Entgegenhaltungen :
**EP-A- 0 022 967**
**DD-A- 134 771**
**FR-A- 2 268 029**
**US-A- 3 344 103**
**US-A- 3 966 661**
**US-A- 4 189 419**

**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Hombach, Rudolf, Dr.**
**Johann-Janssen Strasse 24**
**D-5090 Leverkusen (DE)**
Erfinder : **Nolte, Wilfried, Dr.**
**Gronenborn C 33**
**D-5090 Leverkusen 1 (DE)**
Erfinder : **Russel, Peter J.**
**9, Pevensey Close**
**Worcester (GB)**
Erfinder : **Wall, Nigel G.**
**18 Norton Road**
**Stourbridge West Midlands (GB)**

**Beschreibung**

Die Erfindung betrifft ein Verfahren zur Herstellung von Synthesekautschuklatices durch Polymerisation bestimmter Monomerer in wäßriger Emulsion in Gegenwart eines Kettenübertragungsmittels sowie deren Verwendung als Haftklebstoffrohstoff bei der Herstellung von Haftklebemassen sowie Haftklebemassen enthaltend einen Synthesekautschuklatex.

Druckempfindliche oder Haftklebstoffe finden in großem Umfang Verwendung zur Herstellung von flexiblen Klebebändern, selbstklebenden Etiketten, Folien, selbstklebenden Fußdodenbelägen.

Druckempfindliche Klebstoffe müssen an einer Fläche haften bleiben, wenn sie unter leichtem Druck angebracht werden. Diese Eigenschaften müssen in einem weiten Temperaturbereich erhalten bleiben.

Druckempfindliche Klebstoffe müssen daher günstige Abstimmung zwischen Adhäsion und Kohäsion aufweisen. Unter Adhäsion ist die Eigenschaft zu verstehen, daß der Klebstoff an einer bestimmten Oberfläche haftet, während mit Kohäsion die für den Zusammenhalt der Klebemasse verantwortlichen Kräfte bezeichnet werden.

Druckempfindliche Klebstoffe bestehen üblicherweise aus Natur- oder Synthese-Kautschuk und einem klebrigmachenden Harz. Diese Klebstoffe werden in Form von Lösungen auf das Trägermaterial aufgebracht. Als Lösungsmittel wird im allgemeinen Benzin verwendet. Nach dem Verdampfen des Lösungsmittels bleibt der Klebstoff auf dem Träger zurück.

Nachteilig ist bei diesem Verfahren, daß die Lösungsmittel verlorengehen oder nach aufwendigem Verfahren aus der Abluft zurückgewonnen werden müssen.

Es wurde daher versucht, derartige Klebemassen aus der Schmelze aufzutragen. Hierbei müssen, um die für den Auftrag benötigte niedrige Viskosität der Schmelze zu erreichen, Harze mit niedrigem Schmelzpunkt eingesetzt werden, wodurch die Kohäsion der Klebmassen stark reduziert wird.

Zur Umgehung dieser Nachteile werden druckempfindliche Klebstoffe aus wäßrigen Dispersionen von Polymeren hergestellt.

Hierfür finden vor allem Copolymerisate aus Acrylsäure- und Methacrylsäureester von Alkanolen mit 4-12 C-Atomen Verwendung. Zu den Nachteilen dieser Klebmassen gehört die geringe Kohäsion, die sich einerseits im kalten Fluß, d. h. der Neigung des Klebstoffs vom Träger in den angrenzenden Bereich zu fließen, und andererseits in einer geringen Festigkeit der Klebung bei erhöhten Temperaturen zeigt. Durch Einpolymerisation reaktionsfähiger funktioneller Gruppen und anschließende Vernetzung läßt sich die Kohäsion zwar erhöhen, doch ist hiermit in allen Fällen ein Verlust der Adhäsion verbunden.

Bekannt ist auch die Verwendung von wäßrigen Dispersionen von Natur- und Synthese-Kautschuk zur Herstellung von Haftklebemassen im Gemisch mit dispergierten Harzen. Zur Erzielung einer für die Praxis ausreichenden Adhäsion müssen im allgemeinen Harzmengen von 50-150 %, bezogen auf den Polymeranteil, mitverwendet werden.

Als Harz werden in der Praxis vor allem Polyterpenharze und Collophoniumester in Form von organischen Lösungen oder wäßrigen Dispersionen eingesetzt.

Nachteilig hierbei ist, daß im ersten Fall wieder organische Lösungsmittel eingebracht werden müssen und im zweiten Fall die Harze nach aufwendigem Verfahren dispergiert werden müssen.

Auch tritt bei der Verwendung von Harzdispersionen eine ungenügende Koaleszenz von Harz-Teilchen mit den Latex-Teilchen ein, was einen höheren Harzzusatz erforderlich macht.

Überraschend wurde gefunden, daß sich Haftklebemassen mit ausgezeichneter Adhäsion und Kohäsion auch bei höherer Temperatur ohne Zusatz von klebrigmachenden Harzen aus wäßrigen Dispersionen herstellen lassen, wenn als Haftklebstoffrohstoff ein Kautschuklatex eingesetzt wird, dessen Polymer in Anwesenheit geeigneter Mengen an Reglern hergestellt wurde.

Die Erfindung betrifft somit ein Verfahren zur Herstellung von Synthesekautschuklatices durch Emulsionspolymerisation einer Monomermischung aus einem konjugierten Dien, einem Vinylaromat, Acrylsäureester und $\alpha,\beta$-ungesättigten Mono- oder Dicarbonsäuren, das dadurch gekennzeichnet ist, daß man eine Monomermischung aus

| 40 | bis 80 | Gew.-Teilen eines konjugierten Diens, mit 4 bis 9 C-Atomen |
| 10 | bis 45 | Gew.-Teilen eines Vinylaromaten, |
| 5 | bis 30 | Gew.-Teilen eines Acrylsäureesters mit 4 bis 8 C-Atomen in der Alkoholkomponente, sowie |
| 0,5 bis | 5,0 | Gew.-Teilen einer $\alpha,\beta$-ungesättigten Mono- oder Dicarbonsäure |

polymerisiert, wobei die Summe der Monomerkomponenten 100 Gew.-Teile ergibt, und daß man, bezogen auf 100 Gew.-Teile Monomer, 0,5 bis 2,0 Gew.-Teile eines Kettenübertragungsmittels einsetzt.

Die Herstellung der erfindungsgemäßen Kautschuklatices erfolgt durch Emulsionspolymerisation eines Monomergemisches aus einem oder mehreren konjugierten Dienen mit 4 bis 9 Kohlenstoffatomen und einem oder mehreren Comonomeren aus den Bereichen der Vinylaromaten, der Acrylester mit 4 bis 8 C-Atomen der der Alkoholkomponente, sowie $\alpha,\beta$-ungesättigter Mono- oder Dicarbonsäure.

Als beispielhaft sind zu nennen : für die konjugierten Diene Butadien-1,3, 3-Methylbutadien-1,3 (Isopren), 2,3-Dimethylbutadien-1,3, konjugierte Pentadiene oder Hexadiene, sowie andere substituierte Diene, wie 2-Chlorbutadien-1,3, bevorzugt Butadien, für die Vinylaromaten Styrol, substituierte Styrole, wie 4-Methylstyrol und α-Methylstyrol, ferner Divinylbenzol und Vinylnaphthalin, bevorzugt Styrol, für die Acrylsäureester N-Butylacrylat und 2-Ethylhexylacrylat, für die ungesättigten Carbonsäuren α,β-ungesättigte Mono-carbonsäuren mit 3 bis 5 Kohlenstoffatomen, wie Acryl- und Methacrylsäure, sowie α,β-ungesättigte Dicarbonsäuren mit 4 bis 5 Kohlenstoffatomen, wie Malein-, Fumar-, Citracon- und Itaconsäure, ferner die Halbester der α,β-ungesättigten Dicarbonsäure, wie Maleinsäure-n-dodecylhalbester oder Fumar-n-butylhalbester.

Besonders bevorzugte Monomere sind Butadien-1,3, Styrol, 2-Ethylhexylacrylat, Methacrylsäure, Acrylsäure und Itaconsäure.

Zur Einstellung der Copolymerisateigenschaften werden Kettenübertragungsmittel (Regler) benötigt.

Geeignet sind Alkylmercaptane, bevorzugt solche mit einer Kettenlänge von 4 bis 20 Kohlenstoffatomen, ferner Alkylmercaptane mit weiteren funktionellen Gruppen wie 2-Mercaptoethanol oder Thioglykolsäure, niedere Dialkyldixanthogenate, wie z. B. Diisopropylxanthogendisulfid und organische Halogenverbindungen, wie Tetrabromkohlenstoff oder Brommethylbenzol.

Die verwendete Menge hängt u. a. von der Wirksamkeit des Reglers ab und liegt im Bereich von 0,5 bis 2,0 Gew.-Teilen pro 100 Gew.-Teile Monomer.

Die Herstellung der wäßrigen Kautschuk-Latices erfolgt nach den bekannten Verfahren der Emulsionspolymerisation unter Verwendung von Emulgatoren in bekannter Weise.

Hierzu werden in einer Menge von 0,1 bis 20 Gew.-% (bezogen auf Monomere) anionogene, kationogene oder nicht-ionogene Emulgier- oder Dispergiermittel oder Kombinationen hiervon verwendet.

Beispiele anionogener Emulgatoren sind höhere Fettsäuren, Harzsäuren, höhere Fettalkoholsulfate, höhere Alkylsulfonate und Alkylarylsulfonate sowie deren Kondensationsprodukte mit Formaldehyd, höhere Hydroxyalkylsulfonate, Salze der Sulfobernsteinsäureester und sulfatierte Ethylenoxidaddukte.

Als Beispiele der weniger gebräuchlichen kationogenen Emulgatoren seien Salze von Alkyl-, Aryl- und Alkylarylaminen mit anorganischen oder organischen Säuren, Salze quartärer Ammoniumverbindungen sowie Alkylpyridiniumsalze angeführt.

Als nichtionogene Emulgatoren können z. B. die bekannten Umsetzungsprodukte des Ethylenoxid mit Fettalkoholen, mit Fettsäuren sowie deren Amiden und Alkylphenolen, wie Isononylphenol Anwendung finden. Ferner seien hier die Umsetzungsprodukte des Ethylenoxid mit Alkylmercaptanen und Alkylthiophenolen oder analoge Umsetzungsprodukte veretherter oder veresterter Polyhydroxyverbindungen wie Sorbitmonostearat als Beispiel aufgeführt. Die genannten Verbindungen sind mit 4 bis 60 oder mehr Molen Ethylenoxid umgesetzt. Auch die Blockcopolymere aus Ethylenoxid und Propylenoxid lassen sich verwenden.

Als Initiatoren eignen sich anorganische Peroxo-Verbindungen, wie Wasserstoffperoxid, Natrium-, Kalium- oder Ammoniumperoxodisulfat, Peroxocarbonate und Boratperoxihydrate, ferner organische Peroxoverbindungen, wie Acylhydroperoxide, Diacylperoxide, Alkylhydroperoxide, Dialkylperoxide und Ester, wie tert.-Butylperbenzoat. Die Initiatormenge liegt im allgemeinen in den Grenzen von 0,01 bis 5 Gew.-%, bezogen auf die Gesamtmenge der eingesetzten Monomeren.

Die als Beispiele angeführten anorganischen oder organischen Peroxoverbindungen lassen sich auch in Kombination mit geeigneten Reduktionsmitteln in bekannter Weise anwenden. Als Beispiele solcher Reduktionsmittel seien genannt : Schwefeldioxid, Alkalidisulfite, Alkali- oder Ammoniumhydrogensulfite, Thiosulfat, Dithionit und Formaldehydsulfoxylat, ferner Hydroxylaminhydroxychlorid, Hydrazinsulfat, Eisen (II)-sulfat, Zinn-(II)-chlorid, Titan(III)-sulfat, Hydrochinon, Glucose, Ascorbinsäure und bestimmte Amine.

Häufig empfiehlt es sich, bei Gegenwart von Promotoren zu polymerisieren. Als solche eignen sich z. B. kleine Mengen von Metallsalzen, deren Kationen in mehr als einer Wertigkeitsstufe existieren können. Beispiele sind Kupfer-, Mangan-, Eisen-, Kobalt- und Nickelsalze.

Neben den genannten Komponenten können für die Emulsionspolymerisation der erfindungsgemäßen Kautschuklatices weitere Hilfs- und Modifizierungsmittel, wie Salze, z. B. Natriumsulfat, Phosphate, wie Tetranatriumdiphosphat oder Natriumtriphosphat oder Komplexierungsmittel, wie Ethylendiamintetraessigsäure, sowie Alkalien, wie Natriumhydroxid, ferner pH-Puffer, wie Ammoniak/Ammoniumsalze, verwendet werden.

Wie auf dem Gebiet der Emulsionspolymerisation bekannt ist, kann die Herstellung der Kautschuklatices chargenweise oder kontinuierlich erfolgen.

Es ist möglich, vollständig chargenweise zu arbeiten, wobei die Gesamtmenge der Monomeren in einer wäßrigen Emulgatorlösung emulgiert und die Polymerisation durch Zugabe eines Initiators und gegebenenfalls eines geeigneten Reduktionsmittels ausgelöst wird. Während der Polymerisation kann man kontinuierlich oder absatzweise weitere Emulgatorlösung zufügen.

Es ist jedoch gewöhnlich vorteilhaft, mit einem Teil der Monomeren zu beginnen und den Rest der Monomeren im Maße des Fortschreitens der Polymerisation zusammen mit wäßriger Emulgatorlösung und gegebenenfalls mit weiterem Initiator zuzugeben.

Der Luftsauerstoff im Reaktor wird vor Beginn der Reaktion durch ein Inertgas wie Stickstoff verdrängt. Die Emulsion wird zur Aufrechterhaltung des dispersen Zustands gerührt. Die Polymerisationstemperatur kann in Abhängigkeit vom verwendeten Initiator im Bereich von 0 bis 120 °C, vorzugsweise von 50 bis 100 °C gewählt werden. Die Reaktion führt man bis zu einem Umsatz von 60 bis 100 %, vorzugsweise von 80 bis 98 %.

Nach Erreichen des gewünschten Endumsatzes kann die Reaktion mit einem der üblichen Radikalfänger wie z. B. Diethylhydroxylamin abgestoppt werden. Oder man läßt den Latex einfach abkühlen. Der Kautschuklatex wird filtriert und durch eines der üblichen Entmonomerisierungsverfahren wie z. B. Strippen mit Wasserdampf von nicht umgesetzten Monomeren befreit. Zur endgültigen Einstellung der Latexeigenschaften kann er noch im pH-Wert durch Zusatz von Säure- oder Alkali-Lösung korrigiert und gegebenenfalls mit einem Alterungsschutzmittel versehen werden.

Zur Herstellung von Haftklebeartikeln können die erfindungsgemäß hergestellten Polymerisate in Form von 20-65 %igen wäßrigen Dispersionen in an sich üblicherweise auf die klebrig zu machende Oberfläche der Substrate, wie z. B. Papier, Folien, aufgebracht werden. Die für den Auftrag geeignete Viskosität läßt sich durch Zugabe geeigneter Verdickungsmittel erreichen.

Dabei können die üblichen Zusatzstoffe für druckempfindliche Klebstoffe mitverwendet werden, z. B. Harze, wie Polyterpenharze, Terpen-Phenolharze, Weichmacher, wie Adipin- und Phthalsäureester. Füllstoffe, wie Calciumcarbonat, Bariumsulfat, Silikate und Pigmente können ebenfalls zugesetzt werden.

Um die Alterung oder Oxidationsbeständigkeit der Klebstoffe zu verbessern, können Antioxidationsmittel, wie etwa Amine oder substituierte Phenole mitverwendet werden.

Die erfindungsgemäße Dispersion kann auch in Abmischung mit anderen Polymerdispersionen eingesetzt werden. Als Polymere kommen z. B. Polymerisate aus Chloropren, Acrylat, Acrylnitril, oder Naturkautschuk, in Frage.

Der Auftrag des Klebstoffes kann auf beliebige Substrate erfolgen. Als Substrate kommen z. B. in Frage : Papier, Folien aus Polyethylen, PVC, Polystyrol, Polyester, Metallfolien, Schaumstoff-Folien aus Kautschuk, Polyurethan, PVC, Polystyrol, Textilgewebe und Faservliese aus natürlichen und synthetischen Fasern.

Es können auch Artikel hergestellt werden, die einen Klebstoffauftrag auf beiden Seiten der Substrate tragen. Der Haftklebstoff wird üblicherweise mit einem Rakel auf das Substrat aufgetragen.

Es wurde auch gefunden, daß die erfindungsgemäßen Dispersionen eine gute Verbindung mit zahlreichen Werkstoffen eingehen, wie z. B. Holz, Papier, Kunststoffen, wie PVC, Phenolformaldehydharzen, Keramikplatten, Silikaten wie z. B. Glas, Metalle.

Die erfindungsgemäß hergestellten Synthesekautschuklatices können also als Haftklebstoffrohstoff bei der Herstellung von Haftklebstoffmassen für die Ausrüstung selbstklebender Artikel wie z. B. Klebebändern, Selbstklebeetiketten, Selbstklebefolien, selbstklebenden Fußbodenbelägen, Pflaster u. a. m. eingesetzt werden. Wichtig bei diesem Einsatz ist die Erkenntnis, daß den Haftklebstoffmassen keine klebrigmachenden Harze zugesetzt zu werden brauchen.

Die Herstellung der erfindungsgemäßen Kautschuklatices wird anhand einiger Beispiele erläutert.

Allgemeines Polymerisationsverfahren

In eine 1,5-l-Sodawasserflasche (Kronenkorken) werden

200,0 g Wasser
0,4 g Natriumtriphosphat
1,0 g Kaliumperoxodisulfat
0,4 g Naphthalinsulfonsäure-Formaldehydkondensat
0,4 g Ethylendiamintetraessigsäure, Dinatriumsalz
3,6 g Dicyclohexylsulfosuccinat

eingefüllt. Anschließend gibt man eine Mischung aus

Styrol,
Acrylsäure/Itaconsäure,
tert.-Dodecylmercaptan

zu. Durch den Zusatz von Butadien wird gleichzeitig der Luftsauerstoff aus der Flasche verdrängt. Sie wird mit einem Kronenkorken verschlossen und in eine Schutzhülle gegeben. Die Flasche wird in einem Wasserbad mit 60 UpM 24 Stunden lang bei 72 °C über Kopf geschüttelt. Die Flasche wird danach abgekühlt und geöffnet. Das Monomergemisch wurde zu 96 % umgesetzt. Der erhaltene Latex wird vom nicht ungesetzten Monomer befreit, mit verdünnter Natronlauge auf pH 8 eingestellt und mit einem Alterungsschutzmittel versetzt. Die Prüfung des Latex erfolgt wie nachstehend beschrieben :

Die Klebmassen wurden mit einem Rakel auf eine 50 µ dicke Polyethylenglykolterephthalat-Folie aufgebracht. Die aufgetragene Menge an Feststoff betrug ca. 100 g. Nach dem Auftragen der Klebmassen wurden die beschichteten Folien staubfrei zum Abdunsten des Lösungsmittels bis zur Prüfung gelagert.

1. Prüfung der Klebrigkeit

Die Klebrigkeit wurde manuell durch Berühren der Klebschicht mit dem Finger ermittelt und in einer

**0 036 170**

Skala von 1 (sehr klebrig) bis 5 (nicht ausreichende Klebrigkeit) ausgedrückt.

2. Prüfung der Haftfestigkeit

Zur Prüfung der Haftfestigkeit der Klebmassen wurden aus den beschichteten Folien 30 cm lange und 1,5 cm breite Streifen geschnitten und in Anlehnung an das Prüfverfahren 4001 P 7 der AFERA (Association des Fabricants Européens de Rubans Auto-ADHESIFS) auf eine hochglanzpolierte Edelstahlplatte blasenfrei gebracht und durch zweimaliges Überrollen mit einer 3 kg schweren Aluminiumwalze angepreßt.

Nach einer Lagerung von 30 Minuten wurden die Klebbänder mit einer Geschwindigkeit von 300 mm/Min. im Schälwinkel von 180° von der Edelstahlplatte abgezogen. Die dabei erforderlichen Kräfte sind in der nachstehenden Tabelle aufgeführt.

3. Prüfung der Wärmestandfestigkeit

Zur Prüfung der Wärmestandfestigkeit wurden 1 cm breite Streifen in einer Länge von 6 cm auf eine wie bei der vorstehenden Haftfestigkeitsprüfung verwendete Edelstahlplatte geklebt. Das freie Ende des Klebbandes wurde um den Scherwinkel von 180° gebogen und mit einem Gewicht von 0,05 kp belastet.

Ermittelt wurde die Zeit, während der die Klebungen bei einer Prüftemperatur von 50 °C der angegebenen Last von 0,05 kp widerstanden. Nach 180 Min. wurde die Prüfung abgebrochen. Die angefallenen Ergebnisse sind in der nachfolgenden Tabelle gleichfalls angegeben.

Beispiele 1 bis 6

Gemäß dem allgemeinen Polymerisationsverfahren werden Polymerlatices unterschiedlicher Zusammensetzung mit unterschiedlichen Reglermengen hergestellt. Die weiteren Einzelheiten sind aus den Tabellen 1 bis 2 zu entnehmen.

Tabelle 1

| Beispiel | 1 | 2 | 3 |
|---|---|---|---|
| Monomere (Gew.-Tle) | | | |
| Butadien | 63 | 63 | 53 |
| Styrol | 20 | 21 | 20 |
| Acrylnitril | – | – | 10 |
| EHA$^+$ | 15 | 15 | 15 |
| Acrylsäure | 2 | – | 2 |
| Itaconsäure | – | 1 | – |
| | | | |
| Regler (Gew.-Tle) | | | |
| tert.-Dodecylmercaptan | 1,25 | 1 | 1 |
| Klebrigkeit | 1 – 2 | 1 – 2 | 2 – 3 |
| Afera-Test nach 24 Std. $\lfloor$ P $\rfloor$ | 600 | 800 | 700 |
| nach 1 Mon. $\lfloor$ P $\rfloor$ | 760 | 750 | 480 |
| Wärmestandfestigkeit $\lfloor$Min.$\rfloor$ | 180 | 180 | 60 |

+) EHA = 2-Ethylhexylacrylat

Klebrigkeit : 1 = sehr gut
                2 = gut
                3 = mäßig
                4 = noch ausreichend
                5 = nicht ausreichend

Tabelle 2

| Beispiel | 4 | 5 | 6 | z.Vergleich | z.Vergleich |
|---|---|---|---|---|---|
| Monomere (Gew.-Tle) | | | | Acronal 81 D[1] | Tesafilm[2] |
| Butadien | 63 | 63 | 63 | | |
| Styrol | 20 | 20 | 20 | | |
| EHA | 15 | 15 | 15 | | |
| Acrylsäure | 2 | 2 | 2 | | |
| Regler (Gew.-Tle) | | | | | |
| tert.-Dodecylmercaptan | 0,75 | – | – | | |
| Diisopropylxanthogendisulfid | – | 1 | 2 | | |
| Klebrigkeit | 2–3 | 2 | 1 | 1–2 | 1–2 |
| Afera–Test | | | | | |
| nach 24 Std./ P / | 440 | 550 | 280 | 370 | 360 |
| nach 1 Mon./ P / | 320 | 380 | 200 | 400 | 300 |
| Wärmestandfestigkeit | 30 | 55 | 12 | 0 | 180 |

1) Acrylat-Dispersion auf Basis 2-Ethylhexylacrylat, Hersteller : BASF, Ludwigshafen
2) Naturkautschuk mit klebrigmachendem Harz, Hersteller : Beiersdorf AG, Hamburg

## Ansprüche

1. Verfahren zur Herstellung von Synthesekautschuklatices durch Emulsionspolymerisation einer Monomermischung aus einem konjugierten Dien, einem Vinylaromat, Acrylsäureester und α,β-ungesättigten Mono- oder Dicarbonsäuren, dadurch gekennzeichnet, daß man eine Monomermischung aus

40 bis 80  Gew.-Teilen eines konjugierten Diens mit 4 bis 9 C-Atomen,
10 bis 45  Gew.-Teilen eines Vinylaromaten,
5 bis 30  Gew.-Teilen eines Acrylsäureesters mit 4 bis 8 C-Atomen in der Alkoholkomponente, sowie
0,5 bis 5,0 Gew.-Teilen einer α,β-ungesättigten Mono- oder Dicarbonsäure

polymerisiert, wobei die Summe der Monomerkomponenten 100 Gew.-Teile ergibt, und daß man, bezogen auf 100 Gew.-Teile Monomer, 0,5 bis 2,0 Gew.-Teile eines Kettenübertragungsmittels einsetzt.

2. Verfahren gemäß Anspruch 1, dadurch gekennzeichnet, daß als Kettenübertragungsmittel eine Mercaptoverbindung, ein Dialkylxanthogendisulfid, eine organische Halogenverbindung oder deren Mischung eingesetzt werden.

3. Verfahren gemäß Ansprüchen 1 bis 2, dadurch gekennzeichnet, daß als Kettenübertragungsmittel eine Mercaptoverbindung eingesetzt wird.

4. Verfahren gemäß Ansprüchen 1 bis 3, dadurch gekennzeichnet, daß als Kettenübertragungsmittel ein Alkylmercaptan mit 4 bis 20 C-Atomen eingesetzt wird.

5. Verwendung von Synthesekautschuklatices, die gemäß einem Verfahren der Ansprüche 1 bis 4 hergestellt worden sind, als Haftklebstoffrohstoff bei der Herstellung von Haftklebemassen.

6. Haftklebemassen enthaltend als Haftklebstoffrohstoff einen Synthesekautschuklatex, der nach einem Verfahren gemäß Ansprüchen 1 bis 4 hergestellt worden ist.

## Claims

1. Process for the production of synthetic rubber latices by the emulsion polymerisation of a monomer mixture of a conjugated diene, an aromatic vinyl compound, an acrylic acid ester and α,β-

6

unsaturated mono- or di-carboxylic acids, characterised in that a monomer mixture of

40 to 80 parts by weight of a conjugated diene with 4 to 9 C atoms,
10 to 45 parts by weight of an aromatic vinyl compound,
5 to 30 parts by weight of an acrylic acid ester with 4 to 8 C atoms in the alcohol component, and
0.5 to 5.0 parts by weight of an $\alpha,\beta$-unsaturated mono- or di-carboxylic acid,

is polymerised, the sum of the monomer components being 100 parts by weight, and in that 0.5 to 2.0 parts by weight of a chain transfer agent are used per 100 parts by weight of monomer.

2. Process according to Claim 1, characterised in that the chain transfer agent used is a mercapto compound, a dialkyl xanthogene disulphide, an organic halogen compound or a mixture thereof.

3. Process according to Claim 1 to 2, characterised in that a mercapto compound is used as the chain transfer agent.

4. Process according to Claims 1 to 3, characterised in that an alkyl mercaptan with 4 to 20 C atoms is used as the chain transfer agent.

5. Use of synthetic rubber latices which have been produced by the process of Claims 1 to 4 as a starting material in the production of pressure-sensitive adhesives.

6. Pressure-sensitive adhesives containing as starting material a synthetic rubber latex which has been produced by the process according to Claims 1 to 4.

## Revendications

1. Procédé de fabrication de latex de caoutchouc synthétique par polymérisation en émulsion d'un mélange monomère composé d'un diène conjugué, d'un composé aromatique vinylique, d'un ester d'acide acrylique et d'acides mono- et dicarboxyliques $\alpha,\beta$-insaturés, caractérisé en ce qu'on polymérise un mélange monomère à

40 à 80 parties en poids d'un diène conjugué ayant 4 à 9 atomes de carbone,
10 à 45 parties en poids d'un composé aromatique vinylique,
5 à 30 parties en poids d'un ester d'acide acrylique ayant 4 à 8 atomes de carbone dans le composant alcoolique, de même que
0,5 à 5,0 parties en poids d'un acide mono- ou dicarboxylique $\alpha,\beta$-insaturé,

la somme des monomères représentant 100 parties en poids, et en ce que, par 100 parties en poids de monomère, on utilise 0,5 à 2,0 parties en poids d'un agent de transfert de chaîne.

2. Procédé selon la revendication 1, caractérisé en ce qu'on utilise comme agent de transfert de chaîne un mercaptocomposé, un disulfure de dialcoylxanthogène, un composé halogéné organique ou leur mélange.

3. Procédé selon les revendications 1 à 2, caractérisé en ce qu'on utilise comme agent de transfert de chaîne un mercaptocomposé.

4. Procédé selon les revendications 1 à 3, caractérisé en ce qu'on utilise comme agent de transfert de chaîne un alcoylmercaptan ayant 4 à 20 atomes de carbone.

5. Utilisation de latex de caoutchouc synthétique, qui ont été préparés par un procédé selon les revendications 1 à 4, comme matière première adhésive dans la fabrication de masses adhésives.

6. Masses adhésives contenant comme matière première adhésive un latex de caoutchouc synthétique qui a été préparé par un procédé selon les revendications 1 à 4.

7